# EUROPEAN PATENT SPECIFICATION

(11) **EP 2 706 813 B1**
(45) Date of publication and mention of the grant of the patent: **14.09.2016**
(21) Application number: 13185721.1
(22) Date of filing: 29.01.2009
(51) Int. Cl.: H04W 76/02, H04W 88/06, H04W 84/08

(54) **Mobile TETRA Communications Method and System**
Mobiles TETRA-Kommunikationsverfahren und -system
Procédé et système de communication mobile TETRA

(30) Priority: 29.01.2008 GB 0801594
(43) Date of publication of application: 12.03.2014
(62) Divisional of application: 09705132.0
(73) Proprietor: Sepura PLC, Cambridge CB4 1GR (GB)
(72) Inventor: Rayne, Mark, Wentworth, Cambridge, Cambridgeshire CB6 3ND (GB)
(74) Representative: Tothill, John Paul

(56) References cited:
- WO-A-01/17291
- WO-A1-2006/125044
- US-A1- 2003 060 210
- US-A1- 2004 246 990
- US-A1- 2007 237 134
- "Terrestrial Trunked Radio (TETRA); Voice plus Data (V+D); Part 2: Air Interface (AI); Final draft ETSI EN 300 392-2", ETSI STANDARDS, LIS, SOPHIA ANTIPOLIS CEDEX, FRANCE, vol. TETRA;TETRA-3, no. V3.2.0, 1 June 2007 (2007-06-01), XP014037326, ISSN: 0000-0001

## Description

The present invention relates to mobile communications systems, and in particular to mobile communications systems that can support both speech communication and packet data transmissions.

The TETRA (TErrestrial Trunked RAdio) system is a mobile communications system that allows both speech and packet data communications.

In TETRA, speech communications take place over a circuit-mode voice channel, and packet data is usually sent on a TETRA "packet-data" channel (usually on a "control channel" that is assigned to the purpose of packet data transmissions).

It is becoming increasingly desirable for mobile communications system users to be able to transmit both speech and packet data simultaneously.

The TETRA system allows for this, but the technique for this proposed in the TETRA standard is for a mobile station to send and receive packet data on a TETRA packet data channel and to send and receive speech on a TETRA circuit-mode voice (speech) channel independently and quasi-simultaneously. This arrangement accordingly would normally require the mobile station to have and operate two independent sets of receivers and transmitters (one for the packet data and one for the speech). This adds to the design complexity of the mobile station and so may not always be desirable or possible.

It would also be possible to transmit and receive Voice-over-IP (VoIP) packets on a TETRA packet data channel, which could, accordingly potentially provide an alternative mechanism for transmitting and receiving speech and packet data simultaneously in a TETRA system.

However, this would require the use of a VoIP CODEC for encoding the speech into VoIP packets, which again would add to the complexity of the mobile station.

Also, such VoIP speech could only be received by another TETRA mobile station that supported VoIP, or if the VoIP speech was, for example, transcoded to TETRA-encoded speech elsewhere, such as in the system infrastructure. However, transcoding the VoIP speech in the system infrastructure, for example, would not be possible where end-to-end encryption of the speech was being used (since by definition, end-to-end encrypted speech should and can only be decrypted (and hence decoded) at its end destination).

Thus the use of Voice-over-IP for the simultaneous transmission of speech and packet data in a TETRA system may not always be desirable or practical either.

The Applicants believe therefore that there remains scope for alternative and improved systems for providing the simultaneous transmission of speech and packet data in TETRA mobile communications systems.

WO 2006/125044, "Terrestrial Trunked Radio (TETRA); Voice plus Data (V+D); Part 2: Air Interface (AI); Final draft ETSI EN 300 392-2", ETSI STANDARDS, LIS, SOPHIA ANTIPOLIS CEDEX, FRANCE, vol. TETRA;TETRA-3, no. V3.2.0, 1 June 2007 (2007-06-01), XP014037326, ISSN: 0000-0001, and US 2004/246990 describe existing mobile communications systems arrangements. The independent claims are characterised over WO 2006/125044.

According to a first aspect of the present invention, there is provided a method of operating a TETRA mobile communications system as claimed in claim 1.

According to a second aspect of the present invention, there is provided an apparatus for use in a TETRA mobile communications system as claimed in claim 8.

In the present invention TETRA-encoded speech is transmitted (or received) on a TETRA channel. The Applicants have in particular recognised that it would be possible to encode TETRA-encoded speech in data packets that can be transmitted on a TETRA channel, and, moreover, that such transmission can be interspersed with other (non-speech) data packets, thereby providing, in effect, the simultaneous transmission of speech and data on the (single) channel.

Thus the present invention provides a mechanism whereby a TETRA communications station, such as a mobile station or base station, may transmit and receive speech and other data simultaneously, but without the need, e.g., to have multiple sets of transmitters and receivers, and/or to use other speech codecs, such as a VoIP codec. Moreover, because the speech is still TETRA-encoded, it may be received by existing and standard TETRA communications stations, even if they may not in themselves be operable in the manner of the present invention.

It will be appreciated here that the present invention envisages and encompasses such operation both in the uplink (i.e. mobile station to base station (system infrastructure)) direction and in the downlink (i.e. base station (system infrastructure) to mobile station) direction, and, indeed, and as will be discussed further below, in direct mode operation (i.e. direct mobile station to mobile station communication).

Where the speech is being transmitted from a mobile station (e.g. for uplink transmission and direct mode transmission) then it will be the mobile station itself that formats and transmits the speech accordingly, and that, accordingly, will include the apparatus of the present invention. For transmission from the system infrastructure to a mobile station (in the downlink direction), then the system infrastructure will operate to transmit the speech accordingly and, accordingly, include the apparatus of the present invention. In this case a or the base station itself may include the apparatus and carry out this operation, or there may be an appropriate apparatus or component that is part of the system infrastructure (e.g. part of the SwMI (switching and management infrastructure)) that does this and then provides the relevant data to a base station for transmission (and controls the base station accordingly).

Similarly, the TETRA channel on which the speech data packets and other data is transmitted may be any suitable and desired such channel, i.e. a channel that is capable of carrying data in this form (data packets). Thus it may be, and typically will be, a TETRA packet data channel, but it could also be a so-called "circuit mode" or other form of TETRA channel if that channel is capable of carrying packet data appropriately (which may be the case in some TETRA "circuit mode" channel arrangements), if desired. In a particularly preferred embodiment, the channel is a packet data channel.

The TETRA-encoded speech that is transmitted in data packets in the present invention can be encoded using any desired, defined and supported, TETRA voice-codec. It is preferably encoded using the TETRA full-rate CODEC specified in the TETRA standard (in EN 300 395-2 section 4). Other TETRA codecs, such as the AMR speech codec defined in clause 9 of EN 300 395-2, could be used if desired.

In a preferred embodiment, the CODEC type that is being used to encode the speech is indicated to the receiver. Techniques for doing this will be described in more detail below.

The speech may be end-to-end encrypted, e.g., and preferably, using known TETRA end-to-end encryption techniques if desired.

The data packets that the encoded speech is transmitted in can comprise any desired and suitable form of data packet that can be transmitted on a TETRA, e.g., packet data, channel. In a preferred embodiment, the encoded speech is appropriately packaged into a suitable TETRA PDU (Protocol Data Unit) for transmission. The speech preferably is not sent in an IP packet (doesn't use IP packets), and preferably does not use IP packet headers or an IP data packet transmission protocol.

In a particularly preferred embodiment, the encoded speech is packaged in TETRA N-PDU data packets (i.e. data packets from applications arriving at the TETRA sub-network convergence protocol (SNDCP) layer). Most preferably each such N-PDU is then packaged inside an SN-DATA PDU or an SN-UNITDATA PDU at the SNDCP layer (and then passed to the lower layers for onward transmission, as is known in TETRA). Thus, in a particularly preferred embodiment, the TETRA-encoded speech is sent in SN-DATA or SN-UNIT DATA PDUs on the, e.g., packet data, channel. Most preferably SN-UNIT DATA PDUs are used for the speech, as these are unacknowledged and so more suited to transmissions such as speech where timely delivery may be more important than reliable delivery of all packets.

In a preferred embodiment, each speech data packet includes two encoded TETRA speech frames, although other arrangements would, of course, be possible.

In a preferred embodiment, the data packets (e.g. the N-PDUs) containing the encoded speech include some additional data, preferably as a header and/or footer, as well as the encoded speech.

In one preferred embodiment, a, and in a preferred embodiment each, speech data packet may and preferably does include data indicating the speech codec that has been used to encode the speech and/or the size of the speech frame(s) in the data packet. This has the advantage that the decoding of the speech data packet may be more direct, as it does not, e.g., need to rely on other speech codec or frame size information previously exchanged or agreed between the transmitter and receiver. It would be possible to only include or indicate this information when the codec being used changes, if desired (and/or not in every speech data packet, for example).

In a preferred embodiment, the data packets include information indicating the transmission order of the speech frame or frames that they contain (of their respective speech frame or frames). This is preferably in the form of a sequence number indicating the number in a sequence of speech frames (or of pairs of speech frames) of the speech frames (or pair of speech frames) in question. This is so as to allow the receiver to determine the order of the speech frames, and, e.g., thereby decode them in the correct order, e.g., in the event of delivery perturbations, and/or to identify missing speech frames, e.g., caused by failed transmissions, etc.. (This last may be particularly important in the case of end-to-end encryption, since the encryption synchronisation of a speech frame in TETRA end-to-end encryption is dependent on its sending order.)

In a preferred embodiment, the order of the speech frames is indicated by including the current value of an incrementing counter that counts the successive speech frames, pairs of speech frames, and/or speech data packets. In a preferred embodiment, each pair of speech frames is numbered.

Preferably a 6 to 8 bit, preferably an 8-bit, counter is used, as this should allow sufficient speech frame or speech frame pair, etc., sequence numbers (counter values) between successive new synchronisation value transmissions (e.g. for late-entry purposes) that are made in TETRA. The counter is preferably allowed to cycle around its full range (i.e. increments from its maximum value back to zero and so on), as this avoids the need to allow for very large counter values (and should be possible as it should be unlikely that a speech packet could arrive so late as to be mistaken for a speech packet belonging to a later cycle of the counter).

In a preferred embodiment, the speech data packets include a stealing marker or markers (e.g. corresponding to the number of speech frames in the data packet), which may be used to indicate whether the speech data (frames) in the data packet have been stolen for other purposes, such as for encryption synchronisation or inter-codec signalling.

Similarly, a or each speech frame in a speech data packet can preferably be stolen for other purposes, such as for encryption synchronisation or inter-codec signalling. (Such synchronisation, etc., signalling could, of course, be sent by other means, such as in "synchronisation" packets, as well as or instead of by "stealing" speech frames, if desired.)

In a preferred embodiment, each speech data packet includes a flag indicating whether the speech is end-to-end encrypted or not.

It will be appreciated that there may need to be a mechanism whereby the transmitter and/or receiver may indicate that it wishes to and/or be told to transmit and/or receive speech in the manner of the present invention. This may be done, if required, in any desired and suitable manner, but in a particularly preferred embodiment is done by establishing (invoking or activating) a particular TETRA PDP (packet data protocol) context to use a particular protocol that has (previously) been defined as indicating such speech transmission.

As is known in TETRA, before a mobile station can start sending and receiving packet data via the SNDCP layer, the SNDCP layer must establish one or more PDP contexts by negotiation with the SwMI (Switching and Management Infrastructure) of the communications system. This "negotiation" includes requesting a particular NSAPI (Network Services Access Point Identifier) to be used as a label for the PDP context (in TETRA the NSAPI can have a value in the range 1 to 14) and agreeing the protocol to be used for the data packets transmitted using the context. This "negotiation" may also include agreeing Quality of Service (QoS) parameters for the PDP context.

The Applicants have recognised that the use of speech transmission in the manner of the present invention could conveniently be indicated by using the protocol type agreed during a PDP context negotiation to indicate this.

Thus, in a particularly preferred embodiment, there is a PDP context protocol that is defined as indicating packet data transmissions containing speech in the manner of the present invention, such that, accordingly, this protocol can be requested via TETRA PDP context negotiation to indicate a desire to use such transmission. Once agreed, the transmissions indicating the particular, negotiated, PDP context will then allow the SwMI and/or terminal (e.g. mobile station) to recognise the transmission of packet data speech frames in this manner (because of the PDP context indicated in the transmission) and treat them accordingly.

Thus, in a particularly preferred embodiment, the present invention includes means for or a step of indicating, via a NSAPI negotiation, the intended or desired transmission of TETRA-encoded speech frames in data packets on a TETRA, e.g., packet data, channel. Preferably this is done by indicating (requesting) a particular, preferably predefined, PDP context protocol type, previously defined as indicating such transmission, when establishing the PDP context.

Similarly, in a particularly preferred embodiment, a TETRA packet data protocol (PDP) context can accordingly be established for the purpose of transmitting TETRA-encoded speech in data packets. Similarly, each speech data packet (e.g. and preferably SN-UNIT DATA PDU) header can, and preferably does, contain an NSAPI indicating this PDP context.

It is also preferred, as discussed above, to also transmit other data together with the speech data. This other data may, and, indeed, preferably will, use its own protocol and PDP context, etc., depending on its nature, such as use a previously established IP (Internet Protocol) PDP context if the other data is to be in the form of IP data packets. (In other words, the speech packets will be transmitted using the packet data protocol and Packet Data Protocol context that have previously been defined and established for that purpose, but the other data need not and preferably will not be transmitted using that protocol and context, but will be transmitted using its own, suitable, and different, protocol and context.)

In these embodiments of the invention, the PDP context (or equivalent) may be established e.g. between a terminal and the SwMI (infrastructure) of the communications system, between a terminal and another terminal, between a terminal and a (direct mode operation) gateway, etc., as appropriate and as desired.

These embodiments of the invention can also be applied to the use of a codec that has not been specified for the communications system in question, such as to the use in a TETRA system of a codec that has not been characterised for TETRA. This may be useful to, e.g., intercommunicate with some other system that does not use TETRA codecs, for example, such as Immarsat or GSM, etc. (especially where end-to-end encryption is used).

Indeed, they may, in particular, be used to allow the use of other codecs in a TETRA system, because the size of the speech frame is not so critical (unlike for TETRA speech in TETRA circuit-mode traffic channel) and no special channel coding is required (because the normal TETRA packet data channel coding will be applied to the data packets carrying the speech frames).

Thus, in a particularly preferred arrangement of these embodiments of the invention, in a TETRA system, the speech is encoded using a codec that is not specified for the TETRA system.

In these embodiments of the invention, the request to use the particular PDP context defined for speech purposes is preferably made by sending an appropriate activation protocol data unit (such as, in the case of a TETRA system, a TETRA SN-ACTIVATE PDP CONTEXT DEMAND PDU) indicating this. Preferably a particular Address Type Identifier in Demand (ATID) element (which indicates the protocol type that is being requested) is used in the (SN-ACTIVATE PDP CONTEXT DEMAND) PDU to indicate that the request is for speech packet data transmission in the manner of the present invention. Thus, preferably, a value for the ATID element indicating such speech packet data transmission is defined.

In a preferred embodiment, the negotiation establishing the particular speech transmission context, etc., can also be used to indicate the speech codec-type (and/or speech frame size) being used. This is preferably indicated by a suitable element (field) in the SN-ACTIVATE PDP CONTEXT DEMAND PDU. This may avoid the need to include such data in the speech data packets themselves.

As discussed above, the, e.g., packet data, channel that the speech-containing data packets are transmitted on can be any suitable such channel (e.g. that has the capacity to carry the speech data packets). In one preferred embodiment it is a multi-slot packet data channel (i.e. a packet data-channel that uses multiple time-slots).

The, e.g., packet data, channel can use any suitable and desired modulation scheme of or for the communications system in question. It may, for example, use a higher data rate modulation scheme, such as and preferably, in TETRA, the modulation schemes proposed for TETRA high speed packet data services (TEDS - TETRA Enhanced Data Services).

In a preferred embodiment, the speech data packets are transmitted using a modulation method it is considered more likely to be received reliably, for example considering the present channel conditions. In the case of a TETRA system, a 4-QAM R = 1/2 channel may accordingly be preferred over a 16-QAM R = 1/2 channel, which in turn may be preferred over 64-QAM R = 2/3 channel. In general, relatively lower-level modulation methods may accordingly be preferred, because they incorporate fewer data bits per modulation symbol, and thus assign more energy per bit, and so may be more reliable. On the other hand, a higher modulation rate can transmit more bits per second, conditions permitting.

Thus, in a preferred embodiment, the speech data packets are transmitted at a low (relatively lower) modulation level so as to increase the probability of successful delivery.

It would also be possible, e.g. to use link adaptation for the speech transmission if desired, such as, for example, in good channel conditions shifting the transmission up to a higher modulation level it is believed should work sufficiently reliably (based e.g., on an assessment of the channel performance from signalling messages or feedback messages in the reverse direction).

The other data that is transmitted with the speech data packets on the, e.g., packet data, channel may comprise any desired and suitable such data. It could be other speech data (this may be useful for broadcast-type voice calls). In a preferred embodiment it is non-speech data and preferably is user-data (user-traffic) (as against system signalling data, for example). In a preferred embodiment the other data is transmitted as IP (Internet Protocol) data packets.

In a preferred embodiment, the communications station can preferentially send, and preferably saves for sending, with the speech data packets, data that it wishes to send with a low or reliable modulation level (since, as discussed above, it may be preferred that the speech-containing data packets are sent using a low and/or reliable modulation level).

The speech data packets and the other data packets can be transmitted together on the, e.g., packet data, channel as desired. For example, and preferably, the non-speech data packets are preferably interspersed within the series of speech data packets being transmitted as and when there is space in the channel to accommodate them. In a preferred embodiment both a speech data packet and a data packet containing other data are transmitted within a single transmission timeslot (and preferably within each transmission slot while the speech is being transmitted).

The transmission of the other, e.g. non-speech, data packets is preferably subject to any constraints imposed by the need to transmit the speech data packets appropriately, such as bandwidth constraints imposed by the speech transmission and/or the need for the communications station to switch between receiving and transmitting to sustain the speech conversation, and/or the need to send the speech frames at regular intervals and to fit the other data around this.

In a particularly preferred embodiment, the speech is sent as real time class data (as supported by TETRA). The other, if non-speech, packet data is similarly preferably sent as background class data (as supported by TETRA).

Most preferably each speech frame is sent only once. The speech data packets are preferably sent using a regular transmission schedule.

When it is desired to make a speech call using the technique of the present invention, then any suitable call control protocol can be used for the call. In a preferred embodiment, the existing TETRA call control protocol is used, subject to any adaptations needed to allow at least one participant to send or receive the speech via, e.g., a packet data (or other suitable) channel in the manner of the present invention.

In a preferred embodiment, a call participant can specifically request a packet data speech call during its speech call request or acceptance, e.g., and preferably, by using appropriate, e.g., predefined, call control signalling.

Similarly, a communications station that wishes to start sending or receiving other packet data part way through a circuit mode speech call can preferably request a change to a packet mode speech call, e.g., using a suitable, preferably predefined, call control message.

In a preferred embodiment, the communications system infrastructure, preferably the SwMI, can observe that one participant in an intended call is engaged in sending or receiving packet data and supports packet data speech calls, and assign that participant to a packet data speech call accordingly.

Most preferably, the infrastructure (SwMI) can also or instead, and preferably also, automatically change the call to packet mode operation for a communications station (e.g. and preferably, using a suitable call control message) when it detects a request to start sending or receiving packet data from the communications station at a time when the communications station is engaged in a circuit mode speech call.

Similarly, when a communications station engaged in a packet mode speech call ceases to send or receive other packet data, the communications station can preferably request to be sent back into a circuit mode call, and/or the infrastructure (SwMI) can detect cessation of the other packet data (e.g., in TETRA, by expiration of all other SNDCP CONTEXT_READY timers) and automatically send the communications station back into circuit mode speech.

In a preferred embodiment, the communications system infrastructure (SwMI) can choose to switch communications stations between circuit mode speech and packet mode speech to facilitate management of the available radio resources (e.g. if the SwMI runs short of circuit mode traffic channels).

In a preferred embodiment, when a mobile station (MS) migrates from a cell that supports circuit-mode speech calls to a cell that does not support circuit-mode speech calls while engaged in a call, the communications system infrastructure (SwMI) converts the call into a packet-mode speech call.

Similarly, when a mobile station migrates from a cell that does not support circuit-mode speech calls to a cell that does support circuit-mode speech calls while engaged in a packet-mode speech call, the communications system infrastructure (SwMI) can preferably convert the call from a packet-mode speech call to a circuit-mode speech call.

The present invention can be applied both to individual calls and group calls. In the case of group calls, it is preferably possible for some participants to be operating in circuit mode on one or more shared traffic channels, and other participants to be operating in packet mode on one or more shared packet data channels (PDCHs).

It is also accordingly not required for all participants in a call to be using the packet data speech arrangement of the present invention. For example, one terminal may have a "normal" circuit mode speech connection to the infrastructure, with the other (or another) terminal connected to the infrastructure via a packet data "speech channel" in the manner of the present invention.

It will be appreciated that the system infrastructure in the system of the present invention will operate accordingly to facilitate communication in the manner of the present invention.

Thus, for example, if a mobile station (MS) is sending speech frames to another TETRA MS that is using packet data and supports reception of speech in this way, the SwMI preferably forwards the speech frames in downlink SN-DATA or SN-UNIT DATA PDUs to the recipient mobile station. The receiving MS will recognise that these PDUs contain speech frames from its record of the protocol agreed for the NSAPI included in the PDU, and will forward the raw speech frames to its speech CODEC (via its end-to-end decryption unit if end-to-end encryption is in use).

Similarly, when a mobile station, for example, is sending speech frames as packet data to a TETRA MS that is not using packet data, or that does not support delivery of speech in this format, the SwMI preferably assigns the destination MS to a circuit-mode speech channel, extracts the raw speech frames from the SN-DATA or SN-UNIT DATA PDUs sent by the transmitting mobile station, applies the normal TETRA speech (TCH/S) channel coding and interleaving and delivers the speech frames to the recipient mobile station in order in successive traffic channel slots in the normal way for a circuit mode speech call.

In this case, where the recipient is reached via a circuit mode channel, the SwMI preferably ensures that the speech frames are transmitted in the correct order (e.g. by using limited buffering), replacing missing speech frames by null or dummy speech frames, and discarding late packets. (The large size of the frame-pair number counter should help to ensure that late packets can always be discarded when end-to-end encryption is used.)

On the other hand, when the SwMI receives speech from a mobile station (for example) using a normal TETRA traffic channel and wishes to send the speech to a MS that is currently using a suitable packet data channel and supports the method of this invention, the SwMI preferably removes the interleaving and channel coding from the uplink speech frames and sends them to the target MS inside SN-DATA or SN-UNIT DATA PDUs on the packet data channel (PDCH) being used by the receiver.

The communications station in the present invention may be any suitable such station or communications terminal, such as a mobile station or a base station. It may also be a suitable fixed (TETRA) terminal, such as a dispatcher terminal.

The present invention may also be applied to Direct Mode operating communications terminals and to Direct Mode operation. For example, a Direct Mode gateway in TETRA could convert a DMO circuit-mode speech call into packet data speech for connection into the V+D system, and vice-versa. Similarly, a packet data DMO terminal could pass packet data speech through a packet data gateway, where either or both the terminal and the gateway could use the present invention.

As will be appreciated from the above, the various operations and functions of the present invention may be carried out by and implemented in a mobile station and/or the system infrastructure of the communications system, as desired and as appropriate.

For example, in the case of transmission from a mobile station in the manner of the present invention, it will be the mobile station that performs the various functions and operations of the present invention, and includes the apparatus of the present invention.

Similarly, in the case of transmission from the system infrastructure, it will be the system infrastructure that performs the various functions and operations of the present invention, and includes the apparatus of the present invention. In this latter case, the functions, etc., may be performed by the base station itself, and/or by another component of the system infrastructure. They may also be performed in a distributed fashion (and the apparatus may be implemented in a distributed fashion) in the system infrastructure if desired.

Thus, the present invention also extends to a communications station, such as, preferably, a mobile station, or a base station, incorporating the apparatus of the present invention and to a communications system, preferably a TETRA system, that includes the apparatus of the present invention, preferably in its infrastructure.

As will be appreciated by those skilled in the art, all the aspects and embodiments of the invention described herein may and preferably do include any one or more or all of the preferred and optional features of the invention described herein, as appropriate.

The methods in accordance with the present invention may be implemented at least partially using software e.g. computer programs. It will thus be seen that when viewed from further aspects the present invention provides computer software specifically adapted to carry out a method or the methods herein described when installed on data processing means, a computer program element comprising computer software code portions for performing a method or the methods herein described when the program element is run on data processing means, and a computer program comprising code means adapted to perform all the steps of a method or of the methods herein described when the program is run on a data-processing system.

The invention also extends to a computer software carrier comprising such software which when used to operate a TETRA communications system comprising data processing means causes in conjunction with said data processing means said system to carry out the steps of a method or of the methods of the present invention. Such a computer software carrier could be a physical storage medium such as a ROM chip, CD ROM or disk, or could be a signal such as an electronic signal over wires, an optical signal or a radio signal such as to a satellite or the like.

It will further be appreciated that not all steps of the methods of the invention need be carried out by computer software and thus from a further broad aspect the present invention provides computer software and such software installed on a computer software carrier for carrying out at least one of the steps of a method or of the methods set out herein.

The present invention may accordingly suitably be embodied as a computer program product for use with a computer system. Such an implementation may comprise a series of computer readable instructions either fixed on a tangible medium, such as a computer readable medium, for example, diskette, CD-ROM, ROM, or hard disk, or transmittable to a computer system, via a modem or other interface device, over either a tangible medium, including but not limited to optical or analogue communications lines, or intangibly using wireless techniques, including but not limited to microwave, infrared or other transmission techniques. The series of computer readable instructions embodies all or part of the functionality previously described herein.

Those skilled in the art will appreciate that such computer readable instructions can be written in a number of programming languages for use with many computer architectures or operating systems. Further, such instructions may be stored using any memory technology, present or future, including but not limited to, semiconductor, magnetic, or optical, or transmitted using any communications technology, present or future, including but not limited to optical, infrared, or microwave. It is contemplated that such a computer program product may be distributed as a removable medium with accompanying printed or electronic documentation, for example, shrink-wrapped software, pre-loaded with a computer system, for example, on a system ROM or fixed disk, or distributed from a server or electronic bulletin board over a network, for example, the Internet or World Wide Web.

A number of preferred embodiments of the present invention will now be described by way of example only.

TETRA uses a TDMA signalling structure. A TETRA circuit-mode speech channel comprises 1 timeslot per frame (of 4 timeslots), into which the transmitting mobile station (MS) normally inserts two speech frames.

TETRA speech frames encoded with the usual TETRA codec contain 137 bits of information (EN 300 395-2 clause 4.2.2.7) before channel coding. After channel coding, they contain 216 bits. Circuit-mode speech is always sent in single-slot 25 kHz bandwidth channels using π/4-DQPSK modulation. Each half slot of a TETRA circuit mode speech channel (abbreviated to TCH/S) accommodates 216 bits; a full slot contains 432 bits. (In practice, where a slot contains two speech frames the two frames totalling 274 raw bits are coded and interleaved together to make a total of 432 coded bits.)

On occasion a TETRA MS may steal (i.e. replace) the speech in the first half slot with a signalling message. On other occasions the TETRA end-to-end encryption mechanism (when the speech is being end-to-end encrypted) may steal one or both speech frames and replace them with encryption synchronisation information. This may be done several times at the start of the speech transmission to allow the receiver to acquire initial synchronisation and then periodically (e.g. once per second) to allow late entry of other MSs wishing to receive the call.

When end-to-end encryption is being used, as speech frames are not numbered, the correct order of encrypted speech frames in their passage through the SwMI should be preserved, and any missing speech frames marked, so that the receiver can calculate correctly the encryption synchronization used for each speech frame by extension from the synchronization used for the previous speech frame.

TETRA packet data is sent on a TETRA control channel. A packet data channel (PDCH) is a special case of a TETRA assigned control channel.

The TETRA standard (EN 300 392-2 v3.2.1) permits the use of multi-slot packet data channels. It also permits the use of multiple modulation types, i.e. phase modulation (π/4-DQPSK, and π/8-D8PSK) and QAM modulation (e.g. 4-QAM rate r = ½, 16-QAM r= ½, 64-QAM r = ½, 64-QAM r = 2/3 and 64-QAM r = 1). Phase modulation always uses 25 kHz bandwidth channels, but QAM modulation may use 25 kHz, 50 kHz, 100 kHz and 150 kHz bandwidth channels.

The MAC-level (Medium Access Control) capacity of a TETRA PDCH depends on the type of modulation used, and the channel RF bandwidth of the channel.

Table 1 shows the number of MAC bits available in slots for various types of channel, RF bandwidth, and modulation type (leaving space for CRC bits, any tail bits and channel coding (these values can be obtained from EN 300 392-2).

**Table 1: MAC bits available in various TETRA channel types.**

| Channel name | π/4-DQPSK | π/8-D8PSK | 4-QAM r = 1/2 | 16-QAM r= 1/2 | 64-QAM r=1/2 | 64-QAM r = 2/3 | 64-QAM r = 1 |
|---|---|---|---|---|---|---|---|
| SCH/F (25 kHz) | 268 | - | - | - | - | - | - |
| SCH-P8/F (25 kHz) | - | 412 | - | - | - | - | - |
| SCH-Q/U (25 kHz) | - | - | 181 | 381 | 581 | 781 | 1184 |
| SCH-Q/U (50 kHz) | - | - | 389 | 797 | 1205 | 1613 | 2432 |
| SCH-Q/U (100 kHz) | - | - | 805 | 1629 | 2453 | 3277 | 4928 |
| SCH-Q/U (150 kHz) | - | - | 1221 | 2461 | 3701 | 4941 | 7424 |

When speech is sent on a TETRA traffic channel, there are no additional overheads after the channel coding.

However packet data sent over TETRA is sent in a signalling channel within a hierarchy of protocol data units (PDUs), so when sending TETRA speech CODEC frames on TETRA packet data channels (PDCHs), it is also necessary to consider the overheads of the MAC, LLC, MLE and SNDCP layer PDU headers. The available N-PDU bits for different types of packet data channel slot are shown in table 2.

**Table 2: N-PDU bits available per slot in various TETRA channel types.**

| Channel name | π/4-DQPSK | π/8-D8PSK | 4-QAM r = 1/2 | 16-QAM r= 1/2 | 64-QAM r=1/2 | 64-QAM r=2/3 | 64-QAM r= 1 |
|---|---|---|---|---|---|---|---|
| SCH/F (25 kHz) | 217 | - | - | - | - | - | - |
| SCH-P8/F (25 kHz) | - | 361 | - | - | - | - | - |
| SCH-Q/U (25 kHz) | - | - | 129 | 274 | 419 | 564 | 854 |
| SCH-Q/U (50 kHz) | - | - | 337 | 690 | 1043 | 1396 | 2102 |
| SCH-Q/U (100 kHz) | - | - | 716 | 1448 | 2180 | 2912 | 4376 |
| SCH-Q/U (150 kHz) | - | - | 1132 | 2280 | 3428 | 4576 | 6872 |

It can be seen from this that two TETRA speech frames totalling 274 raw bits cannot be accommodated in a π/4-DQPSK or 4-QAM 25 kHz channel providing one slot per frame, but they could be accommodated into any other type of PDCH, including a π/4-DQPSK PDCH using two or more slots per frame.

It can also be seen that two TETRA speech frames of 432 coded bits can be accommodated in 4-QAM channels using 100 or 150 kHz bandwidth.

Multi-slot packet-data channels should similarly provide sufficient capacity for sending speech and data at the same time.

Furthermore, there is generally plenty of space in the channel to include other data packets in addition to the TETRA speech frames.

In the TETRA (and GSM and GPRS systems), packet data is handled in the sub-network convergence protocol (SNDCP) layer.

Data packets arriving at the TETRA SNDCP from applications are known as N-PDUs. The SNDCP layer packages each N-PDU inside an SN-DATA PDU or an SN-UNIT DATA PDU and passes it to the lower layers for onward transmission. Each SN-(UNIT) DATA PDU header contains an NSAPI, which is a reference to a PDP (packet data protocol) context. The PDP context identifies the protocol used by the packet (and, in the case of IP protocol for example, the source IP address of uplink packets, the destination IP address of downlink packets and the types of compression used (if any)).

Before a mobile station (MS) can start sending and receiving packet data in TETRA, the SNDCP layer of the mobile station must establish one or more PDP contexts by negotiation with the SwMI. The negotiation includes agreeing Quality of Service (QoS) parameters for the PDP context, requesting a particular NSAPI (one of fourteen possible values in the case of TETRA), and agreeing a packet data protocol.

Where an IP protocol is requested, for example, an IP address is also agreed for the requesting application and the IP address is bound to the NSAPI and MS address in the SwMI. This allows the SwMI to route IP addressed packets to the correct MS and the correct NSAPI within the MS. The MS may then use the NSAPI to route the packet to the correct application.

A preferred embodiment for transmitting TETRA speech frames in data packets on a TETRA packet data channel along with other data packets will now be described.

In the present embodiment, TETRA speech-frames are transmitted on the packet data channel as suitable N-PDUs (protocol data units).

Table 5 illustrates the format of a TETRA speech data packet that is sent in the present embodiment.

**Table 5: Contents of a TETRA speech packet carried in an SN-DATA PDU**

| **Information element** | | **Length** | **Type** | **C/O/M** | **Remark** |
|---|---|---|---|---|---|
| End-to-end encryption flag | | 1 | 1 | M | |
| CODEC type | | 8 | 1 | M | |
| Speech frame pair number | | 8 | 1 | M | |
| First frame stealing flag | | 1 | 1 | M | |
| First speech frame | | Varies | | C | See notes 1 and 2 |
| First stolen frame | | 137 | | C | See note 3 |
| Second frame stealing flag | | 1 | 1 | M | |
| Second speech frame | | Varies | | C | See note 4 and 5 |
| Second stolen frame | | 137 | | C | See note 6 |
| Note 1: | Shall be present if first frame stealing flag = "0" | | | | |
| Note 2: | Length depends on CODEC type. Length shall be 137 bits if CODEC type = "standard TETRA CODEC". | | | | |
| Note 3: | Shall be present if first frame stealing flag = "1" | | | | |
| Note 4: | Shall be present if second frame stealing flag = "0" | | | | |
| Note 5: | Length depends on CODEC type. Length shall be 137 bits if CODEC type = "standard TETRA CODEC". | | | | |
| Note 6: | Shall be present if second frame stealing flag = "1" | | | | |

As shown in table 5, each speech data packet firstly includes two speech frames. Where the standard TETRA codec is being used, each speech frame will comprise 137 bits, as shown. (Where a different TETRA speech CODEC is used, the number of bits used in the first and second speech frames would be different (i.e. would be something other than 137 bits).)

As shown in Table 5, as well as the speech frames, the speech data packet includes some other, header, data inside the speech N-PDU.

Firstly, a data field is added indicating which speech CODEC is in use. This is used to indicate the size of each speech frame (as discussed above, in the standard TETRA CODEC this would be 137 bits, but may be different for other speech frames). This information is used by the receiver of TETRA speech packets to decode the PDU correctly.

Including the CODEC type in each PDU carrying TETRA speech data allows the decoding of the PDUs to be more direct, because it does not depend on information stored during PDP context activation.

As an alternative arrangement, a single bit "CODEC changed flag" could be included in the speech data packet and then the 8-bit CODEC type element included only when the CODEC changed flag is set.

The speech data packet also includes a speech frame pair number value which indicates the sequence number of the pair of speech frames in the data packet. The speech frame pair number is provided to allow the SwMI and later recipients to keep the speech packets in the correct order, since data packets may take different routes through packet data networks, and thus arrive in the wrong order. This allows the receiver to decode the speech frames in the correct order in the event that some delivery perturbation has occurred, and can be used to identify missing speech frames cause by failed transmissions, etc.

This is particularly important when end-to-end encryption is used, since the encryption synchronisation of each speech frame is dependent on its sending order. Thus the recipient must arrange incoming speech packets in their correct order, and account for any missing packets before attempting to decrypt the speech. (Where the recipient is reached via a circuit mode channel, the SwMI must ensure that the speech frames are transmitted in the correct order (possibly using limited buffering), replacing missing speech frames by null or dummy speech frames, and discarding late packets.)

The speech frame pair number is generated in the present embodiment using a counter. In the case of TETRA a new synchronisation value is sent about once per second (i.e. about every 18 pairs of speech frames), so a 6 to 8 bit counter would generally be sufficient. The counter is cycled repeatedly around its full range in the present embodiment. This is possible as a speech packet is unlikely to arrive so late as to be mistaken for a speech packet belonging to a later cycle of the counter.

The large size of the frame-pair number helps to ensure that late packets can always be discarded when end-to-end encryption is used. (This is desirable because if a packet goes missing on its journey through the packet data network, the transmitting base station must, in TETRA end-to-end encryption arrangements, replace the missing packet by a dummy packet at the time when the next speech frame is due to be transmitted to the receiver, so that the receiver does not lose count of the packets and so remains in synchronisation. However, if the missing packet subsequently arrives (perhaps by some other route) at the transmitting base station, the base station must then discard the late-arrived packet, as if it were to transmit the late packet to the mobile station, that would upset the mobile station's encryption synchronisation (since it has already been accounted for by the dummy packet already transmitted by the base station).)

As shown, the speech data packet also includes two stealing markers in the speech packet, one for the first speech frame, and the other for the second speech frame, of the pair of speech frames in the data packet. This allows the receiver to identify when speech frames have been stolen, for example, for encryption synchronisation or inter-CODEC signalling.

It would also or instead be possible to, for example, add the synchronization information in occasional TETRA speech packets instead of replacing (stealing) the speech. This might be useful where the highest quality speech is required, where more frequent synchronisation is required and where the channel has sufficient bandwidth to accommodate easily both the speech and the synchronisation. (Where such speech is being sent on by the SwMI to its destination in a circuit mode channel, the SwMI would have to drop the speech when synchronization information is present.)

Alternatively, the SwMI might choose between dropping the sycnhronisation or dropping the speech so as to provide about one synchronisation burst per second on the circuit mode speech channel.

The size of a TETRA speech data packet based on table 5 is 293 bits when using the standard TETRA CODEC. This will fit into all types of packet data channel except a single slot π/4-DQPSK channel or when using 4-QAM r=1/2 modulation in a single or two-slot 25 kHz channel or 16-QAM r=1/2 modulation in a single slot 25 kHz channel, generally with room to spare for additional data packets (see table 2).

In the present embodiment, when it is desired to transmit or receive speech data packets in this manner, this is first indicated by appropriate PDP context negotiation.

In particular, in the present embodiment, a new protocol type can be indicated during PDP context negotiation, corresponding to the "TETRA speech protocol" of the present embodiment. This enables the SwMI and MS to recognise when they receive TETRA speech frames via SNDCP in the manner of the present embodiment and treat them accordingly.

Table 3 illustrates the format of a TETRA SN-ACTIVATE PDP CONTEXT DEMAND PDU (message) that is used to request activation of the particular PDP context for TETRA speech purposes of the present embodiment.

**Table 3: TETRA SN-ACTIVATE PDP CONTEXT DEMAND PDU**

| **Information element** | **Lengths** | **type** | **C/O/M** | **Remark** |
|---|---|---|---|---|
| SN PDU type | 4 | 1 | M | SN-ACTIVATE PDP CONTEXT DEMAND |
| SNDCP version | 4 | 1 | M | |
| NSAPI | 4 | 1 | M | see notes 1 and 2 |
| Address type identifier in demand | 3 | 1 | M | |
| IP Address IPv4 | 32 | | C | see note 3 |
| NSAPI | 4 | | C | see notes 4 and 5 |
| Packet data MS Type | 4 | 1 | M | |
| PCOMP negotiation | 8 | 1 | M | |
| Number of Van Jacobson compression state slots | 8 | | C | see note 6 |
| Number of compression state slots, TCP | 8 | | C | see note 7 |
| Number of compression state slots, non-TCP | 16 | | C | see note 7 |
| Maximum interval between full headers | 8 | | C | see note 7 |
| Maximum time interval between full headers | 8 | | C | see note 7 |
| Largest header size in octets that may be compressed | 8 | | C | see note 7 |
| Access point name index | 16 | 2 | O | see note 8 |
| DCOMP negotiation | varies | 3 | O | |
| Protocol configuration options | varies | 3 | O | see note 9 |
| QoS | varies | 3 | O | |

| | | | | |
|---|---|---|---|---|
| NOTE 1: The MS shall not use value 0. NOTE 2: Shall contain the NSAPI for the requested PDP context NOTE 3: Shall be conditional on the value of Address Type Identifier in Demand (ATID): - when ATID = 0 the information element shall be present; - for any other value of the ATID the information element shall not be present NOTE 4: Shall be conditional on the value of Address Type Identifier in Demand (ATID): - when ATID = 5 (secondary PDP context requested) the information element shall be present; - for any other value of the ATID the information element shall not be present. NOTE 5: Shall contain the NSAPI of the primary PDP context from which the requested secondary PDP context derives its PDP address. NOTE 6: Shall be conditional on the value bit 1 (LSB) of PCOMP negotiation: - when bit 1 of PCOMP negotiation = 0 the information element shall not be present; - when bit 1 of PCOMP negotiation = 1 the information element shall be present. NOTE 7: Shall be conditional on the value bit 2 of PCOMP negotiation: - when bit 2 of PCOMP negotiation = 0 the information element shall not be present; - when bit 2 of PCOMP negotiation = 1 the information element shall be present. NOTE 8: The default value shall be "0000hex". NOTE 9: The maximum length shall be 128 octets. | | | | |

In table 3, the address type identifier in demand (ATID) element indicates the protocol type that is being requested. In the present embodiment, a new value is available for the ATID element, with the meaning "TETRA speech protocol)".

Table 4 illustrates the possible values of ATID, including the new TETRA speech protocol value of the present embodiment.

**Table 4: Proposed Address Type Identifier in Demand information element contents**

| **Information element** | **Length** | **Value** | **Remark** |
|---|---|---|---|
| Address Type Identifier in Demand | 3 | 0 | IPv4 Static Address |
| | | 1 | IPv4 Dynamic Address Negotiation |
| | | 2 | IPv6 |
| | | 3 | Mobile IPv4 Foreign Agent care of address requested |
| | | 4 | Mobile IPv4 Co-located care-of address requested |
| | | 5 | Primary NSAPI (secondary PDP context requested) |
| | | 6 | TETRA speech protocol |
| | | 7 | Reserved |

In an alternative arrangement, when the ATID indicates TETRA speech protocol, the CODEC-type information element could be included in the SN-ACTVATE PDP CONTEXT DEMAND PDU, instead of in the speech data packets themselves, if desired.

Once the speech packet data PDP context has been negotiated, then calls can be made using the speech data packet transmission.

In the present embodiment, the setting up and control of such calls where at least one participant sends or receives the speech via SNDCP is done using the existing TETRA call control protocol(s) so far as is possible.

Thus, a call participant can specifically request a packet data speech call during its speech call request or acceptance by using suitable call control signalling. This can be achieved, e.g., by modifying the existing TETRA call control protocol (e.g. either by adding new PDUs, and/or by including additional information elements in existing PDUs) to permit the packet data speech call to be requested and indicated, etc..

Similarly, the SwMI can observe that one participant in an intended call is engaged in sending or receiving packet data and supports packet data speech calls, and then assign that participant to a packet data speech call.

A mobile station wishing to start sending or receiving other packet data part way through a circuit mode speech call can request a change to a packet mode speech using a suitable call control message. Similarly, the SwMI can automatically change the call to packet mode for that MS using a call control message when it detects the mobile station's request to start sending or receiving packet data at a time when the MS is engaged in a circuit mode speech call.

In similar manner, when a mobile station engaged in a packet mode speech call ceases to send or receive other packet data, the MS can request to be sent back into a circuit mode call, or the SwMI can detect cessation of the other packet data transmission or reception (e.g., in TETRA, by expiration of all other SNDCP CONTEXT_READY timers) and automatically send the MS back into circuit mode speech.

The SwMI can preferably also choose to switch MSs between circuit mode speech and packet mode speech to facilitate management of the available radio resources (e.g. if the SwMI runs short of traffic channels).

In the present embodiment, once a call is established and in progress, the speech data packets are sent as real time class data (as supported by TETRA). Each speech frame is sent only once without retransmission and using a regular transmission schedule (as is supported by TETRA). (This is because retransmission of the speech would cause delays, and may cause the received speech to vary in rate.)

While transmitting speech data packets on the packet data channel, transmission and reception of unrelated packet data can, and preferably does, also take place, as discussed above. The only constraints are the available bandwidth and the need for the mobile station to switch between receive and transmit to sustain the conversation - during the call, reception and transmission periods for other packet data would be constrained to the speech reception and transmission periods.

It would be possible for a TETRA MS to send and receive real-time class data and background class data within a single transmission slot, for example.

As TETRA is presently constrained to use the same modulation level for all PDUs transmitted within a single slot, if this is being done, and the speech is transmitted at a low modulation level (e.g. 4-QAM r = 1/2) to increase its probability of successful delivery, then other data using that slot will also be sent at a low modulation level. The MS preferably therefore saves, if possible, data that the MS wishes to send with low modulation level for transmission in the slots that the MS uses for TETRA speech.

During the speech call, the TETRA SwMI should operate accordingly to transmit the speech frames to and from the call parties appropriately.

Thus, when a mobile station is sending speech frames in packet data data packets to another TETRA MS that is using packet data and supports reception of speech in this way, the SwMI will forward the speech frames in downlink SN-DATA or SN-UNIT DATA PDUs. The receiving MS will recognise that these PDUs contain speech frames from its record of the protocol agreed for the NSAPI included in the PDU, and will forward the raw speech frames to its speech CODEC (via its end-to-end decryption unit if end-to-end encryption is in use).

When an MS is sending speech frames in packet data data packets to a TETRA MS that is not using packet data, or does not support delivery of speech in this format, the SwMI will assign the destination MS to a circuit-mode speech channel, extract the raw speech frames from the SN-DATA or SN-UNIT DATA PDUs sent from the transmitting MS, apply the normal TETRA speech (TCH/S) channel coding and interleaving and deliver the speech frames in order in successive traffic channel slots in the normal way for a circuit mode speech call.

When the SwMI receives speech from a mobile station using a normal TETRA traffic channel and wishes to send the speech to a mobile station that is currently using a suitable packet data channel and supports the method of this embodiment, the SwMI removes the interleaving and channel coding from the uplink speech frames and sends them to the target mobile station inside SN-DATA or SN-UNIT DATA PDUs on the packet data channel being used by the receiver.

This proposal applies both to individual calls and group calls. In the case of group calls, it would be possible for some participants to be operating in circuit mode on one or more shared traffic channels and other participants to be operating in packet mode on one or more shared PDCHs. Similarly, in the case of any given communication, one terminal may use packet mode speech in the manner of the present embodiment, with the other terminal using circuit mode speech, if desired.

The present invention, in its preferred embodiments at least, can provide a simple and efficient method of sending and receiving TETRA CODEC speech frames on a single TETRA, e.g., packet data, channel simultaneously with other (e.g. IP) packet data. This provides a practical method of realising simultaneous voice and data transmission. While transmitting voice on a PDCH, for example, unrelated packet data can be sent to the SwMI in any remaining bandwidth. While receiving voice on a PDCH, unrelated packet data can be received by the MS in any remaining bandwidth.

The speech frames can be transported with relatively little signalling overhead, and may be end-to-end encrypted using the normal methods for end-to-end encryption of TETRA voice, including the encryption synchronisation mechanism.

The present invention is particularly applicable to the new high speed packet data version of TETRA (TEDS). The TETRA infrastructure can recognise the speech packets and can route their content in and out of TETRA traffic channels.

TETRA terminals using the invention can engage in speech calls with TETRA radios that do not recognize the invention, and terminals can move between a normal speech traffic channel and a packet data channel (PDCH) as required, for example to maintain an uninterrupted conversation if a packet data communication starts or stops partway through a voice call, and vice versa.

This is achieved in the preferred embodiments of the present invention at least by transmitting and receiving TETRA-encoded speech in special data packets on TETRA channels whenever an MS is involved in sending or receiving packet data. The TETRA-encoded speech is transmitted and received via an SNDCP PDP context with a special protocol indication.

## Claims

1. A method of operating a TETRA mobile communications system, the method comprising:
transmitting to and/or receiving from a communications station of the system on a TETRA channel, data packets containing TETRA-encoded speech interspersed with data packets containing other data for transmission; and
**characterised by** further comprising:
transferring a communications station that is engaged in a circuit-mode speech call to transmit and/or receive the call in the form of speech data packets if a request to start transmitting packet data to or from the communications station is detected; and/or
assigning a communications station that requests a speech call whilst engaged in transmitting and/or receiving packet data to a call in which speech for the call will be transmitted to or from the communications station in the form of speech data packets; and/or
transferring a communications station that is engaged in transmitting and/or receiving a call in the form of speech data packets to a circuit-mode speech call when a cessation of the transmitting or receiving of other packet data is detected.

2. The method of claim 1 comprising packaging the TETRA-encoded speech in TETRA PDU data packets.

3. The method of claim 1, or 2 comprising including in a data packet containing TETRA-encoded speech, data indicating a speech codec that has been used to encode the speech, and/or the size of a speech frame in the speech data packet, and/or information indicating the transmission order of a speech frame or frames the data packet contains, and/or a stealing marker or markers indicating whether the speech data in the data packet has been stolen for other purposes, and/or a flag indicating whether the speech is end-to-end encrypted or not.

4. The method of any one of the preceding claims, comprising a communications station requesting a packet data speech call during its speech call request or acceptance.

5. The method of any one of the preceding claims, comprising a communications station requesting a change to a packet data speech call during a circuit mode speech call.

6. The method of any one of the preceding claims, comprising the system infrastructure switching communications stations between circuit mode speech calls and packet data speech calls to manage available radio resources.

7. The method of any one of the preceding claims, comprising:
during a group call, transmitting speech for some communications stations in the group call in circuit mode on one or more shared traffic channels, and transmitting speech for other communications stations in the group call using packet data on one or more shared packet data channels.

8. The method of any one of the preceding claims comprising:
transferring a communications station that is engaged in a circuit-mode speech call to transmit and/or receive the call in the form of speech data packets if migration of the communications station to a cell that does not support circuit-mode speech calls is detected or requested; and/or
transferring a communications station that is engaged in transmitting and/or receiving a call in the form of speech data packets to a circuit-mode speech call if migration of the communications station to a cell that supports circuit-mode speech calls is detected or requested.

9. An apparatus for use in a TETRA mobile communications system, the apparatus comprising:
means for transmitting and/or receiving on a TETRA channel, data packets containing TETRA-encoded speech interspersed with data packets containing other data for transmission; and
**characterised by** further comprising:
means for transferring a communications station that is engaged in a circuit-mode speech call to transmit and/or receive the call in the form of speech data packets if a request to start transmitting packet data to or from the communications station is detected; and/or
means for assigning a communications station that requests a speech call whilst engaged in transmitting and/or receiving packet data to a call in which speech for the call will be transmitted to or from the communications station in the form of speech data packets; and/or
means for transferring a communications station that is engaged in transmitting and/or receiving a call in the form of speech data packets to a circuit-mode speech call when a cessation of the transmitting or receiving of other packet data is detected.

10. The apparatus of claim 9 comprising means for packaging and/or receiving the TETRA-encoded speech in TETRA PDU data packets.

11. The apparatus of claim 9, or 10 comprising means for including in a data packet which contains TETRA-encoded speech, data indicating a speech codec that has been used to encode the speech, and/or the size of a speech frame in the speech data packet, and/or information indicating the transmission order of a speech frame or frames the data packet contains; and/or a stealing marker or markers indicating whether the speech data in the data packet has been stolen for other purposes, and/or a flag indicating whether the speech is end-to-end encrypted or not.

12. The apparatus of any one of claims 9 to 11 comprising:
means for transferring a communications station that is engaged in a circuit-mode speech call to transmit and/or receive the call in the form of speech data packets if migration of the communications station to a cell that does not support circuit-mode speech calls is detected or requested; and/or
means for transferring a communications station that is engaged in transmitting and/or receiving a call in the form of speech data packets to a circuit-mode speech call if migration of the communications station to a cell that supports circuit-mode speech calls is detected or requested.

13. A TETRA mobile communications system comprising the apparatus of any one of claims 9 to 12.

14. The system of claim 13, comprising a communications station comprising means for requesting a packet data speech call during a speech call request or acceptance.

15. The system of claim 13 or 14, comprising a communications station comprising means for requesting a change to a packet data speech call during a circuit mode speech call.

16. The system of any one of claims 13 to 15, comprising a system infrastructure comprising means for switching communications stations between circuit mode speech calls and packet data speech calls to manage available radio resources.

17. The system or apparatus of any one of claims 9 to 16, comprising:
means for, during a group call, transmitting speech for some communications stations in the group call in circuit mode on one or more shared traffic channels and transmitting speech for other communications stations in the group call using packet data on one or more shared packet data channels.

18. A computer program element comprising computer software code portions for performing the method of any one of claims 1 to 8 when the program element is run on data processing means.

## Patentansprüche

1. Verfahren zum Betreiben eines TETRA-Mobilkommunikationssystems, das Verfahren umfassend:
Übertragen und/oder Empfangen von Datenpaketen, die TETRA-codierte Sprache enthalten und mit Datenpaketen durchsetzt sind, die andere Daten zur Übertragung enthalten, von einer Kommunikationsstation des Systems auf einem TETRA-Kanal; und
**gekennzeichnet, durch** weiterhin umfassend:
Umlegen einer Kommunikationsstation, die mit einem Sprachruf im Leitungsvermittlungsmodus beschäftigt ist, um den Ruf in Form von Sprachdatenpaketen zu übertragen und/oder zu empfangen, wenn eine Anforderung zum Starten der Übertragung von Paketdaten zur oder von der Kommunikationsstation erkannt wird; und/oder
Zuweisen einer Kommunikationsstation, die einen Sprachruf anfordert, während sie mit dem Übertragen und/oder Empfangen von Paketdaten beschäftigt ist, zu einem Ruf, bei dem Sprache für den Ruf in Form von Sprachdatenpaketen zu oder von der Kommunikationsstation übertragen werden wird; und/oder
Umlegen einer Kommunikationsstation, die mit dem Übertragen und/oder Empfangen eines Rufs in Form von Sprachdatenpaketen beschäftigt ist, zu einem Sprachruf im Leitungsvermittlungsmodus, wenn ein Ende des Übertragens oder Empfangens anderer Paketdaten erkannt wird.

2. Verfahren nach Anspruch 1, umfassend Packen der TETRA-codierten Sprache in TETRA-PDU-Datenpakete.

3. Verfahren nach Anspruch 1 oder 2, umfassend Einbeziehen in einem Datenpaket, das TETRA-codierte Sprache enthält, Daten, die einen Sprach-Codec angeben, der zum Codieren der Sprache genutzt wurde, und/oder die Größe eines Sprach-Frames in dem Sprachdatenpaket, und/oder Informationen, die die Übertragungsreihenfolge eines Sprach-Frames oder mehrerer Sprach-Frames angeben, der oder die in dem Datenpaket enthalten sind, und/oder einen oder mehrere Entwendungsmarker, die angeben, ob die Sprachdaten in dem Datenpaket für andere Zwecke entwendet worden sind, und/oder eine Markierung, die angibt, ob die Sprache durchgängig verschlüsselt ist oder nicht.

4. Verfahren nach einem der vorhergehenden Ansprüche, umfassend eine Kommunikationsstation, die einen Paketdaten-Sprachruf während ihrer Sprachrufanforderung oder -annahme anfordert.

5. Verfahren nach einem der vorhergehenden Ansprüche, umfassend eine Kommunikationsstation, die einen Wechsel zu einem Datenpaket-Sprachruf während eines Sprachrufs im Leitungsvermittlungsmodus anfordert.

6. Verfahren nach einem der vorhergehenden Ansprüche, umfassend die Systeminfrastruktur umschaltend Kommunikationsstationen zwischen Sprachruf im Leitungsvermittlungsmodus und Paketdaten-Sprachruf zum Verwalten verfügbarer Funkressourcen.

7. Verfahren nach einem der vorhergehenden Ansprüche, umfassend:
während eine Gruppenrufs, Übertragen von Sprache für einige Kommunikationsstationen in dem Gruppenruf in Leitungsvermittlungsmodus auf ein oder mehreren gemeinsamen Verkehrskanälen, und
Übertragen von Sprache für andere Kommunikationsstationen in dem Gruppenruf unter Verwendung von Paketdaten auf ein oder mehreren gemeinsamen Paketdatenkanälen.

8. Verfahren nach einem der vorhergehenden Ansprüche, umfassend:
Umlegen einer Kommunikationsstation, die mit einem Sprachruf im Leitungsvermittlungsmodus beschäftigt ist, um den Ruf in Form von Sprachdatenpaketen zu übertragen und/oder zu empfangen, wenn eine Migration der Kommunikationsstation zu einer Zelle, die Sprachrufe im Leitungsvermittlungsmodus nicht unterstützt erkannt oder angefordert wird; und/oder
Umlegen einer Kommunikationsstation, die mit dem Übertragen und/oder Empfangen eines Rufs in Form von Sprachdatenpaketen zu einem Sprachruf im Leitungsvermittlungsmodus beschäftigt ist, wenn eine Migration der Kommunikationsstation zu einer Zelle, die Sprachrufe im Leitungsvermittlungsmodus unterstützt erkannt oder angefordert wird.

9. Vorrichtung zur Nutzung in einem TETRA-Mobilkommunikationssystem, die Vorrichtung umfassend:
Mittel zum Übertragen und/oder Empfangen von Datenpaketen, die TETRA-codierte Sprache enthalten und mit Datenpaketen durchsetzt sind, die andere Daten zur Übertragung enthalten, auf einem TETRA-Kanal; und
**gekennzeichnet, durch** weiterhin umfassend:
Mittel zum Umlegen einer Kommunikationsstation, die mit einem Sprachruf im Leitungsvermittlungsmodus beschäftigt ist, um den Ruf in Form von Sprachdatenpaketen zu übertragen und/oder zu empfangen, wenn eine Anforderung zum Starten der Übertragung von Paketdaten zur oder von der Kommunikationsstation erkannt wird; und/oder
Mittel zum Zuweisen einer Kommunikationsstation, die einen Sprachruf anfordert, während sie mit dem Übertragen und/oder Empfangen von Paketdaten beschäftigt ist, zu einem Ruf, bei dem Sprache für den Ruf in Form von Sprachdatenpaketen zu oder von der Kommunikationsstation übertragen werden wird; und/oder
Mittel zum Umlegen einer Kommunikationsstation, die mit dem Übertragen und/oder Empfangen eines Rufs in Form von Sprachdatenpaketen beschäftigt ist, zu einem Sprachruf im Leitungsvermittlungsmodus, wenn ein Ende des Übertragens oder Empfangens anderer Paketdaten erkannt wird.

10. Vorrichtung nach Anspruch 9, umfassend Mittel zum Packen und/oder Empfangen der TETRA-codierten Sprache in TETRA-PDU-Datenpaketen.

11. Vorrichtung nach Anspruch 9 oder 10, umfassend Mittel zum Einbeziehen in einem Datenpaket, das TETRA-codierte Sprache enthält, Daten, die einen Sprach-Codec angeben, der zum Codieren der Sprache genutzt wurde, und/oder die Größe eines Sprach-Frames in dem Sprachdatenpaket, und/oder Informationen, die die Übertragungsreihenfolge eines Sprach-Frames oder mehrerer Sprach-Frames angeben, der oder die in dem Datenpaket enthalten sind, und/oder einen oder mehrere Entwendungsmarker, die angeben, ob die Sprachdaten in dem Datenpaket für andere Zwecke entwendet worden sind, und/oder eine Markierung, die angibt, ob die Sprache durchgängig verschlüsselt ist oder nicht.

12. Vorrichtung nach einem der Ansprüche 9 bis 11, umfassend:
Mittel zum Umlegen einer Kommunikationsstation, die mit einem Sprachruf im Leitungsvermittlungsmodus beschäftigt ist, um den Ruf in Form von Sprachdatenpaketen zu übertragen und/oder zu empfangen, wenn eine Migration der Kommunikationsstation zu einer Zelle, die Sprachrufe im Leitungsvermittlungsmodus nicht unterstützt erkannt oder angefordert wird; und/oder
Mittel zum Umlegen einer Kommunikationsstation, die mit dem Übertragen und/oder Empfangen eines Rufs in Form von Sprachdatenpaketen zu einem Sprachruf im Leitungsvermittlungsmodus beschäftigt ist, wenn eine Migration der Kommunikationsstation zu einer Zelle, die Sprachrufe im Leitungsvermittlungsmodus unterstützt erkannt oder angefordert wird.

13. TETRA-Mobilkommunikationssystem, umfassend die Vorrichtung nach einem der Ansprüche 9 bis 12.

14. System nach Anspruch 13, umfassend eine Kommunikationsstation umfassend Mittel zum Anfordern eines Paketdaten-Sprachrufs während einer Sprachrufanforderung oder -annahme.

15. System nach Anspruch 13 oder 14, umfassend eine Kommunikationsstation umfassend Mittel zum Anfordern eines Wechsels zu einem Datenpaket-Sprachruf während eines Sprachrufs im Leitungsvermittlungsmodus.

16. System nach einem der Ansprüche 13 bis 15, umfassend eine Systeminfrastruktur umfassend Mittel zum Umschalten von Kommunikationsstationen zwischen Sprachruf im Leitungsvermittlungsmodus und Paketdaten-Sprachruf zum Verwalten verfügbarer Funkressourcen.

17. System oder Vorrichtung nach einem der Ansprüche 9 bis 16, umfassend:
Mittel zum, während eine Gruppenrufs, Übertragen von Sprache für einige Kommunikationsstationen in dem Gruppenruf in Leitungsvermittlungsmodus auf ein oder mehreren gemeinsamen Verkehrskanälen, und zum Übertragen von Sprache für andere Kommunikationsstationen in dem Gruppenruf unter Verwendung von Paketdaten auf ein oder mehreren gemeinsamen Paketdatenkanälen.

18. Computerprogrammelement, umfassend Computer-Software-Code-Abschnitte zum Durchführen des Verfahrens nach einem der Ansprüche 1 bis 8, wenn das Programmelement auf einem Datenverarbeitungsmittel ausgeführt wird.

## Revendications

1. Procédé de fonctionnement d'un système de communications mobiles TETRA, le procédé comprenant les étapes consistant à :
transmettre à et/ou recevoir d'une station de communications du système sur un canal TETRA des paquets de données contenant de la parole codée TETRA intercalés avec des paquets de données contenant d'autres données pour la transmission ; et
**caractérisé en ce qu'**il comprend en outre les étapes consistant à :
transférer une station de communications qui est engagée dans un appel vocal en mode de circuit pour transmettre et/ou recevoir l'appel sous la forme de paquets de données vocales si une demande d'initiation d'une transmission de données en paquets à la station de communications ou depuis celle-ci est détectée ; et/ou
affecter une station de communications qui demande un appel vocal tout en étant engagée dans la transmission et/ou la réception de données en paquets à un appel dans lequel de la parole pour l'appel sera transmise à la station de communications ou depuis celle-ci sous la forme de paquets de données vocales ; et/ou
transférer une station de communications qui est engagée dans la transmission et/ou la réception d'un appel sous la forme de paquets de données vocales à un appel vocal en mode de circuit lorsqu'une cessation de la transmission ou de la réception d'autres données en paquets est détectée.

2. Procédé selon la revendication 1, comprenant le conditionnement de la parole codée TETRA dans des paquets de données PDU TETRA.

3. Procédé selon la revendication 1 ou la revendication 2, comprenant l'inclusion dans un paquet de données contenant de la parole codée TETRA de données indiquant un codec vocal qui a été utilisé pour coder la parole et/ou la taille d'une trame vocale dans le paquet de données vocales ; et/ou d'informations indiquant l'ordre de transmission d'une ou plusieurs trames vocales que le paquet de données contient ; et/ou d'un ou plusieurs marqueurs de vol indiquant si les données vocales du paquet de données ont été volées à d'autres fins et/ou d'un drapeau indiquant si la parole est cryptée bout à bout ou non.

4. Procédé selon l'une quelconque des revendications précédentes, comprenant une station de communications demandant un appel vocal de données en paquets au cours de sa demande ou de son acceptation d'appel vocal.

5. Procédé selon l'une quelconque des revendications précédentes, comprenant une station de communications demandant un changement à un appel vocal de données en paquets au cours d'un appel vocal en mode de circuit.

6. Procédé selon l'une quelconque des revendications précédentes, comprenant l'infrastructure du système qui commute des stations de communications entre des appels vocaux en mode de circuit et des appels vocaux de données en paquets pour gérer des ressources radio disponibles.

7. Procédé selon l'une quelconque des revendications précédentes, comprenant,
au cours d'un appel groupé, la transmission de parole pour certaines stations de communications dans l'appel groupé en mode de circuit sur un ou plus de canaux de trafic partagés et la transmission de la parole pour d'autres stations de communications dans l'appel groupé en utilisant des données en paquets sur un ou plus de canaux de données en paquets partagés.

8. Procédé selon l'une quelconque des revendications précédentes, comprenant les étapes consistant à :
transférer une station de communications qui est engagée dans un appel vocal en mode de circuit pour transmettre et/ou recevoir l'appel sous la forme de paquets de données vocales si la migration de la station de communications à une cellule qui ne supporte pas les appels vocaux en mode de circuit est détectée ou demandée ; et/ou
transférer une station de communications qui est engagée dans la transmission et/ou la réception d'un appel sous la forme de paquets de données vocales à un appel vocal en mode de circuit si la migration de la station de communications à une cellule qui supporte les appels vocaux en mode de circuit est détectée ou demandée.

9. Appareil pour utilisation dans un système de communications mobiles TETRA, l'appareil comprenant :
des moyens pour transmettre à et/ou recevoir sur un canal TETRA des paquets de données contenant de la parole codée TETRA intercalés avec des paquets de données contenant d'autres données pour la transmission ; et
**caractérisé en ce qu'**il comprend en outre :
des moyens pour transférer une station de communications qui est engagée dans un appel vocal en mode de circuit pour transmettre et/ou recevoir l'appel sous la forme de paquets de données vocales si une demande d'initiation d'une transmission de données en paquets à la station de communications ou depuis celle-ci est détectée ; et/ou
des moyens pour affecter une station de communications qui demande un appel vocal tout en étant engagée dans la transmission et/ou la réception de données en paquets à un appel dans lequel de la parole pour l'appel sera transmise à la station de communications ou depuis celle-ci sous la forme de paquets de données vocales ; et/ou
des moyens pour transférer une station de communications qui est engagée dans la transmission et/ou la réception d'un appel sous la forme de paquets de données vocales à un appel vocal en mode de circuit lorsqu'une cessation de la transmission ou de la réception d'autres données en paquets est détectée.

10. Appareil selon la revendication 9, comprenant des moyens pour le conditionnement et/ou la réception de la parole codée TETRA dans des paquets de données PDU TETRA.

11. Appareil selon l'une quelconque des revendications 9 à 10, comprenant des moyens pour inclure dans un paquet de données contenant de la parole codée TETRA des données indiquant un codec vocal qui a été utilisé pour coder la parole et/ou la taille d'une trame vocale dans le paquet de données vocales ; et/ou des informations indiquant l'ordre de transmission d'une ou plusieurs trames vocales que le paquet de données contient ; et/ou un ou plusieurs marqueurs de vol indiquant si les données vocales du paquet de données ont été volées à d'autres fins et/ou un drapeau indiquant si la parole est cryptée bout à bout ou non.

12. Appareil selon l'une quelconque des revendications 9 à 11, comprenant :
des moyens pour transférer une station de communications qui est engagée dans un appel vocal en mode de circuit pour transmettre et/ou recevoir l'appel sous la forme de paquets de données vocales si la migration de la station de communications à une cellule qui ne supporte pas les appels vocaux en mode de circuit est détectée ou demandée ; et/ou
des moyens pour transférer une station de communications qui est engagée dans la transmission et/ou la réception d'un appel sous la forme de paquets de données vocales à un appel vocal en mode de circuit si la migration de la station de communications à une cellule qui supporte les appels vocaux en mode de circuit est détectée ou demandée.

13. Système de communications mobiles TETRA comprenant l'appareil selon l'une quelconque des revendications 9 à 12.

14. Système selon la revendication 13, comprenant une station de communications comprenant des moyens pour demander un appel vocal de données en paquets au cours d'une demande ou d'une acceptation d'appel vocal.

15. Système selon la revendication 13 ou la revendication 14, comprenant une station de communications comprenant des moyens pour demander un changement à un appel vocal de données en paquets au cours d'un appel vocal en mode de circuit.

16. Système selon l'une quelconque des revendications 13 à 15, comprenant une infrastructure de système comprenant des moyens pour commuter des stations de communications entre des appels vocaux en mode de circuit et des appels vocaux de données en paquets pour gérer des ressources radio disponibles.

17. Système ou appareil selon l'une quelconque des revendications 9 à 16, comprenant :
des moyens pour, au cours d'un appel groupé, transmettre la parole pour certaines stations de communications dans l'appel groupé en mode de circuit sur un ou plus de canaux de trafic partagés et transmettre la parole pour d'autres stations de communications dans l'appel groupé en utilisant des données en paquets sur un ou plus de canaux de données en paquets partagés.

18. Elément de programmation informatique comprenant des portions de code logiciel d'ordinateur pour effectuer le procédé selon l'une quelconque des revendications 1 à 8, lorsque l'élément de programmation tourne sur des moyens de traitement de données.
